# EUROPEAN PATENT APPLICATION

(11) **EP 4 564 089 A1**
(43) Date of publication of application: **04.06.2025**
(21) Application number: 23846147.9
(22) Date of filing: 04.07.2023
(51) Int. Cl.: G02F 3/00, G06E 3/00

(54) **OPTICAL COMPUTATION DEVICE**

(30) Priority: 26.07.2022 JP 2022118933
(71) Applicant: Fujikura Ltd., Tokyo 135-8512 (JP)
(72) Inventor: ASAOKA, Shun, Tokyo 135-8512 (JP); KUSAKA, Hiroyuki, Tokyo 135-8512 (JP); KASHIWAGI, Masahiro, Tokyo 135-8512 (JP); OTAKE, Mamoru, Tokyo 135-8512 (JP)
(74) Representative: Plasseraud IP
(86) International application number: PCT/JP2023/024750
(87) International publication number: WO 2024/024414

(57) **Abstract**

An optical computing device (1) includes an optical computing section (11) including an optical modulation element (11ai) and an image sensor (12) configured to generate an electrical signal indicating an intensity distribution of a signal light outputted from the optical computing section (11). The phase modulation amounts of the cells constituting the optical modulation element (11ai) are set so that a direction in which a signal light (SLi) is emitted differs from a direction in which a noise light (NSi) is emitted. This achieves an optical computing device that has a reduced impact of a noise light on an electrical signal generated by an image sensor.

## Description

### Technical Field

The present invention relates to an optical computing device that carries out optical computing with use of an optical modulation element having a plurality of cells having phase modulation amounts that are independently set or that are capable of being independently set.

### Background Art

There has been known an optical modulation element which has a plurality of cells and which is designed to optically perform predetermined computing by causing signal light beams having respectively been transmitted through the plurality of cells to interfere with each other. Optical computing carried out with use of such an optical modulation element has an advantage of achieving higher speed and lower electric power consumption as compared with electrical computing carried out with use of a processor. Further, by causing a plurality of optical modulation elements to sequentially act on signal light, it is possible to easily achieve high-level optical computing that is difficult to achieve with a single optical modulation element.

Patent Literature 1 discloses an optical neural network having an input layer, an intermediate layer, and an output layer. The above-described optical modulation element can be used as, for example, the intermediate layer of such an optical neural network.

### Citation List

### [Patent Literature]

[Patent Literature 1] Specification of US Patent No. 7847225

### Summary of Invention

### Technical Problem

However, when a signal light before computing is caused to enter an optical modulation element, various noise lights, as well as a signal light indicating a result of the computing, are emitted from the optical modulation element. In a case where the optical modulation element is a transmissive optical modulation element, the signal light indicating a result of computing is generated when the transmitted light beams that have been phase-modulated by the cells constituting the optical modulation element interfere with each other. Among the noise lights, a noise light that is generated when the signal light before computing is transmitted (regular transmission) by the optical modulation element without being phase-modulated by each of the cells is emitted in the same direction as the signal light. In a case where the optical modulation element is a reflective optical modulation element, the signal light indicating a result of computing is generated when the reflected light beams that have been phase-modulated by the cells constituting the optical modulation element interfere with each other. Among the noise lights, a noise light that is generated when the signal light before computing is reflected (regular reflection) by the optical modulation element without being phase-modulated by each of the cells is emitted in the same direction as the signal light.

Among the noise lights emitted from the optical modulation elements, a noise light that is emitted in the same direction as the signal light enters the image sensor together with the signal light. Thus, such a noise light has an impact on the electrical signal generated by the image sensor. Further, in a case where the impact of the noise light is great, it becomes difficult to correctly read a result of the optical computing from the electrical signal generated by the image sensor.

An aspect of the present invention has been achieved in light of the foregoing problem, and it is an object thereof to achieve an optical computing device that has a reduced impact of a noise light on an electrical signal generated in an optical sensor.

### Solution to Problem

An optical computing device in accordance with Aspect 1 of the present invention includes: an optical computing section including an optical modulation element having a plurality of cells having phase modulation amounts that are independently set or that are capable of being independently set; and an optical sensor configured to detect a signal light that has been outputted from the optical computing section and to generate an electrical signal indicating a result of detection, wherein the optical modulation element is (1) a transmissive optical modulation element configured to emit a signal light generated when transmitted light beams that have been phase-modulated by the plurality of cells interfere with each other and a noise light that has been transmitted through the optical modulation element without being phase-modulated by each of the plurality of cells or (2) a reflective optical modulation element configured to emit a signal light generated when reflected light beams that have been phase-modulated by the plurality of cells interfere with each other and a noise light that has been reflected by the optical modulation element without being phase-modulated by each of the plurality of cells, in the optical modulation element, the phase modulation amounts of the plurality of cells are set so that a direction in which the signal light is emitted from the optical modulation element differs from a direction in which the noise light is emitted from the optical modulation element, and an impact that the noise light has on the electrical signal is smaller than a case where the direction in which the signal light is emitted from the optical modulation element agrees with the direction in which the noise light is emitted from the optical modulation element.

### Advantageous Effects of Invention

According to an aspect of the present invention, it is possible to achieve an optical computing device that has a reduced impact of a noise light on an electrical signal generated in an image sensor.

### Brief Description of Drawings

Fig. 1 is a side view illustrating an optical computing device in accordance with Embodiment 1 of the present invention.
Fig. 2 is a side view illustrating a variation of the optical computing device illustrated in Fig. 1.
Fig. 3 is a plan view and a cross-sectional view each illustrating a first configuration example of an optical modulation element included in the optical computing device illustrated in Fig. 1.
Fig. 4 is a cross-sectional view illustrating a second configuration example of the optical modulation element included in the optical computing device illustrated in Fig. 1.
Fig. 5 is a perspective view illustrating a third configuration example of the optical modulation element included in the optical computing device illustrated in Fig. 1.
Fig. 6 is a side view illustrating an optical computing device in accordance with Embodiment 2 of the present invention.
Fig. 7 is a side view illustrating a first variation of the optical computing device illustrated in Fig. 6.
Fig. 8 is a top view, a side view, and a plan view each illustrating a second variation of the optical computing device illustrated in Fig. 6.
Fig. 9 is a plan view and a cross-sectional view each illustrating a first configuration example of an optical modulation element included in the optical computing device illustrated in Fig. 6.
Fig. 10 is a cross-sectional view illustrating a second configuration example of the optical modulation element included in the optical computing device illustrated in Fig. 6.
Fig. 11 is a perspective view illustrating a third configuration example of the optical modulation element included in the optical computing device illustrated in Fig. 6.

### Description of Embodiments

### [Embodiment 1]

### (Configuration of optical computing device)

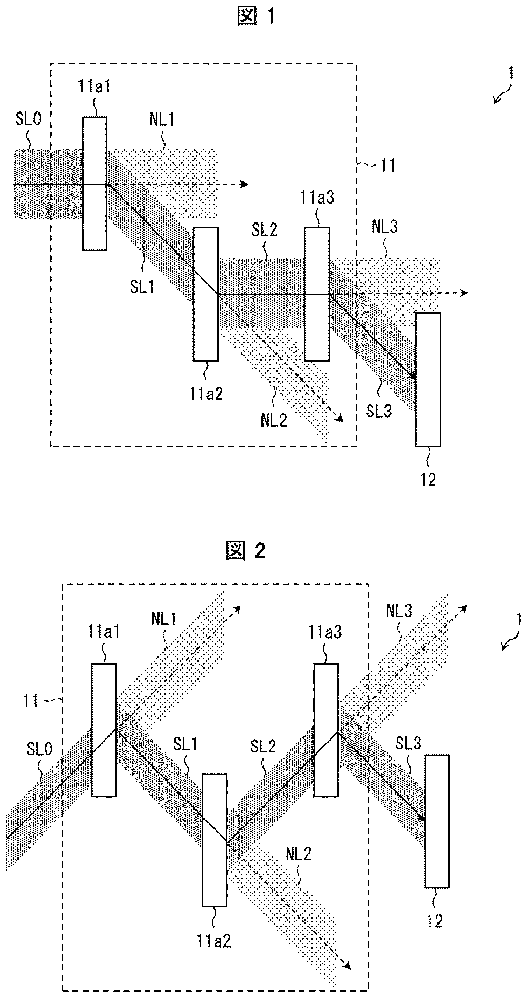

With reference to Fig. 1, the following description will discuss a configuration of an optical computing device 1 in accordance with Embodiment 1 of the present invention. Fig. 1 is a side view illustrating a configuration of the optical computing device 1.

As illustrated in Fig. 1, the optical computing device 1 includes an optical computing section 11 and an image sensor 12.

The optical computing section 11 is a set of one or more optical modulation elements 11a1 to 11an (n is a natural number of not less than 1). In the present embodiment, in order to realize multiple-stage optical computing, a set of three optical modulation elements 11a1 to 11a3 is used as the optical computing section 11. The optical modulation elements 11a1 to 11an may be integrated together. For example, n light diffraction layers formed in a structure that transmits a signal light, such as a dried gel, may be used as the optical modulation elements 11a1 to 11an.

Each of the optical modulation elements 11ai (i is a natural number of not less than 1 and not more than n) is constituted by a plurality of cells having phase modulation amounts set independently of each other. Each of the optical modulation elements 11ai is a transmissive optical modulation element and is configured to carry out optical computing by causing transmitted light beams that have been phase-modulated by the cells to interfere with each other. Note here that "carrying out optical computing" means to convert a two-dimensional intensity distribution of a signal light, from a two-dimensional intensity distribution representing information before computing into a two-dimensional intensity distribution representing information after the computing. A configuration example of the transmissive optical modulation element will be described later with reference to a different drawing.

In addition to the above-described signal light, the optical modulation element 11ai emits a noise light that has been transmitted through the optical modulation element 11ai without being phase-modulated by each of the cells. For example, in a case where there is a gap between the cells constituting the optical modulation element 11ai, the light that has passed through this gap becomes a noise light. The optical axis of the noise light emitted from the optical modulation element 11ai is located in a plane including the optical axis of a signal light that enters the optical modulation element 11ai and the normal of the incidence surface of the optical modulation element 11ai. An emission angle at which the noise light is emitted from the optical modulation element 11ai is the same as an incidence angle at which the signal light enters the optical modulation element 11ai. That is, an optical axis of the noise light agrees with an optical axis of the transmitted light assumed in a case where the signal light is regularly transmitted through the optical modulation element 11ai.

In order to separate such a noise light from the signal light, the phase modulation amounts of the cells constituting the optical modulation element 11ai are set so that a direction in which the signal light is emitted from the optical modulation element 11ai differs from a direction in which the noise light is emitted from the optical modulation element 11ai. In the transmissive optical modulation element, an emission angle of a noise light is the same as an incidence angle of incident light. Therefore, the phase modulation amounts of the cells are set so as to prevent the emission angle of the signal light from being the same as the incidence angle of the incident light.

In the present embodiment, a signal light SL0 perpendicularly enters an incidence surface of the first optical modulation element 11a1. The first optical modulation element 11a1 perpendicularly emits a noise light NL1 and obliquely emits a signal light SL1 from the emission surface thereof. The second optical modulation element 11a2 is disposed so as to (1) allow the incidence surface thereof to be parallel to the emission surface of the first optical modulation element 11a1, (2) allow the incidence surface thereof to cross the signal light SL1 that has been emitted from the first optical modulation element 11a1, and (3) prevent the incidence surface thereof from crossing the optical axis of the noise light NL1 that has been emitted from the first optical modulation element 11a1. Note that a condition that the optical axis of the noise light NL1 that has been emitted from the first optical modulation element 11a1 is prevented from crossing a point at which the incidence surface of the second optical modulation element 11a2 crosses the signal light SL1 that has been emitted from the first optical modulation element 11a1 may be imposed instead of imposing the above condition (3). Alternatively, a condition that at least part of the noise light NL1 that has been emitted from the first optical modulation element 11a1 is prevented from entering the incidence surface of the second optical modulation element 11a2 may be imposed.

In the present embodiment, the second optical modulation element 11a2 obliquely emits a noise light NL2 and perpendicularly emits a signal light SL2. The third optical modulation element 11a3 is disposed so as to (1) allow the incidence surface thereof to be parallel to the emission surface of the second optical modulation element 11a2, (2) allow the incidence surface thereof to cross the signal light SL2 that has been emitted from the second optical modulation element 11a2, and (3) prevent the incidence surface thereof from crossing the optical axis of the noise light NL2 that has been emitted from the second optical modulation element 11a2. Note that a condition that the optical axis of the noise light NL2 that has been emitted from the second optical modulation element 11a2 is prevented from crossing a point at which the incidence surface of the third optical modulation element 11a3 crosses the signal light SL2 that has been emitted from the second optical modulation element 11a2 may be imposed instead of imposing the above condition (3). Alternatively, a condition that at least part of the noise light NL2 that has been emitted from the second optical modulation element 11a2 is prevented from entering the incidence surface of the third optical modulation element 11a3 may be imposed. The third optical modulation element 11a3 perpendicularly emits a noise light NL3 and obliquely emits a signal light SL3. In the present embodiment, the optical axes of the signal lights SL0 to SL3 and the optical axes the noise lights NL1 to NL3 are located in the same plane.

The image sensor 12 is one example of an optical sensor, which is means for detecting the signal light SL3 that has been outputted from the optical computing section 11 and generating an electrical signal indicating a result of the detection. In order to generate an electrical signal indicating an intensity distribution of the signal light SL3 that has been emitted from the optical computing section 11, the image sensor 12 is constituted by a plurality of photoelectric conversion units. The image sensor 12 is disposed so as to (1) allow the incidence surface thereof to be parallel to the emission surface of the third optical modulation element 11a3, (2) allow the incidence surface thereof to cross the optical axis of the signal light SL3 that has been emitted from the optical computing section 11, and (3) prevent the incidence surface thereof from crossing the optical axes of the noise lights NL1 to NL3 that have been emitted from the optical computing section 11. A condition that the optical axes of the noise lights NL1 to NL3 that have been emitted from the optical computing section 11 are prevented from crossing a point at which the incidence surface of the image sensor 12 crosses the optical axis of the signal light SL3 that has been emitted from the optical computing section 11 may be imposed instead of imposing the above condition (3).

The above arrangement of the optical modulation elements 11a1 to 11a3 and the image sensor 12 reduces the impacts of the noise lights NL1 to NL3 on the electrical signal generated by the image sensor 12 to be smaller than that of the conventional optical computing device in which a signal light SLi and a noise light NLi are emitted in the same direction from each optical modulation element 11ai. Instead of imposing a condition that (a certain point of) the incidence surface of the image sensor 12 is prevented from crossing the optical axes of the noise lights NL1 to NL3, a condition that points at which the optical axes of the signal lights SL1 to SL3 cross the incidence surface of the image sensor 12 differ from points at which the optical axes of the noise lights NL1 to NL3 cross the incidence surface of the image sensor 12 may be imposed. Also in this case, it is possible to reduce the intensities of the noise lights NL1 to NL3 that enter the image sensor 12, compared with the conventional configuration in which the center of the incidence surface of the image sensor 12 crosses the optical axes of the noise lights NL1 to NL3. This makes it possible to suppress the impacts of the noise lights NL1 to NL3 on the electrical signal generated by the image sensor 12. This also holds true when a condition that at least part of the noise lights NL1 to NL3 is prevented from entering the incidence surface of the image sensor 12 is imposed.

Note that the present embodiment employs an arrangement in which all the photoelectric conversion units constituting the image sensor 12 are located so as to prevent the noise lights NL1 to NL3 from entering the photoelectric conversion units at intensities of not less than detection limits thereof, but the present invention is not limited to this. For example, it is also possible to employ an arrangement in which among the photoelectric conversion units constituting the image sensor 12, a photoelectric conversion unit that the signal light SL3 enters at an intensity of not less than a detection limit thereof is located so as to prevent each of the noise lights NL1 to NL3 from entering the photoelectric conversion unit at an intensity of not less than the detection limit. Also in this case, it is possible to reduce the impacts of the noise lights NL1 to NL3 on the electrical signal generated by the image sensor 12 to be smaller than that of the conventional optical computing device.

The present embodiment employs a configuration in which the signal light SL0 that has been subjected to two-dimensional intensity modulation with use of input data is inputted to the optical computing section 11, but the present invention is not limited to this. That is, it is also possible to employ a configuration in which the carrier light is inputted to the optical computing section 11, and the signal light SL1 that has been two-dimensionally modulated with use of input data is generated by the optical modulation element 11a1. The optical computing device 1 may further include a display configured to generate the signal light SL0 or a light source configured to generate a carrier light.

Note that the phase modulation amount of each cell of the optical modulation element 11ai can be set, for example, through machine learning. A model used in this machine learning can be, for example, a model in which a two-dimensional intensity distribution of the signal light SL0 that enters the optical modulation element 11a1 is an input, and a two-dimensional intensity distribution of the signal light SL3 that enters the image sensor 12 is an output and which includes a phase modulation amount of each cell of the optical modulation element 11ai as a parameter. Note here that the two-dimensional intensity distribution of the signal light SL0 inputted to the optical modulation element 11a1 means, for example, a set of intensities of the beams of the signal light SL0 that enter the respective cells constituting the optical modulation element 11a1. The two-dimensional intensity distribution of the signal light SL3 that enters the image sensor 12 refers to, for example, a set of intensities of the beams of the signal light SL3 that enter the respective photoelectric conversion units constituting the image sensor 12.

In a case where the optical computing section 11 includes an optical modulation element 11ai having a variable phase modulation amount of each cell, the optical computing device 1 may include a control section that sets a phase modulation amount of each cell of the optical modulation element 11ai. This makes it possible to change the contents of optical computing carried out by the optical computing device 1.

In a case where n light diffraction layers formed in a dried gel are used as the optical modulation elements 11a1 to 11an, it is preferable to use a gel that is subjected to dehydration shrinkage so that the gel shrinks while keeping a similar shape, e.g., a gel used in the Implosion Fabrication process. This makes it possible to, by drying a swollen gel in which n light diffraction layers are formed, easily manufacture the optical computing section 11 in which the n light diffraction layers are disposed with high precision.

### (Variation of optical computing device)

With reference to Fig. 2, the following description will discuss a variation of the optical computing device 1. Fig. 2 is a side view illustrating a configuration of an optical computing device 1 in accordance with the present variation (hereinafter, referred to as "optical computing device 1A").

As with the optical computing device 1, the optical computing device 1A includes the optical computing section 11 and the image sensor 12. A difference between the optical computing device 1A and the optical computing device 1 is the positions of the optical modulation elements 11a1 to 11a3 and the image sensor 12.

In the present variation, the signal light SL0 obliquely enters an incidence surface of a first optical modulation element 11a1. The first optical modulation element 11a1 obliquely emits the noise light NL1 and the signal light SL1 in different directions. The second optical modulation element 11a2 is disposed so as to (1) allow the incidence surface thereof to be parallel to the emission surface of the first optical modulation element 11a1, (2) allow the incidence surface thereof to cross the signal light SL1 that has been emitted from the first optical modulation element 11a1, and (3) prevent the incidence surface thereof from crossing the optical axis of the noise light NL1 that has been emitted from the first optical modulation element 11a1. The second optical modulation element 11a2 obliquely emits the noise light NL2 and the signal light SL2 in different directions. The third optical modulation element 11a3 is disposed so as to (1) allow the incidence surface thereof to be parallel to the emission surface of the second optical modulation element 11a2, (2) allow the incidence surface thereof to cross the signal light SL2 that has been emitted from the second optical modulation element 11a2, and (3) prevent the incidence surface thereof from crossing the optical axis of the noise light NL2 that has been emitted from the second optical modulation element 11a2. The third optical modulation element 11a3 obliquely emits the noise light NL3 and the signal light SL3 in different directions. The image sensor 12 is disposed so as to (1) allow the incidence surface thereof to be parallel to the emission surface of the third optical modulation element 11a3, (2) allow the incidence surface thereof to cross the optical axis of the signal light SL3 that has been emitted from the optical computing section 11, and (3) prevent the incidence surface thereof from crossing the optical axes of the noise lights NL1 to NL3 that have been emitted from the optical computing section 11. The optical axes of the signal lights SL0 to SL3 and the optical axes of the noise lights NL1 to NL3 are located in the same plane.

The above arrangement of the optical modulation elements 11a1 to 11a3 and the image sensor 12 reduces the impacts of the noise lights NL1 to NL3 on the electrical signal generated by the image sensor 12 to be smaller than that of the conventional optical computing device in which a signal light SLi and a noise light NLi are emitted in the same direction from each optical modulation element 11ai.

### (Configuration example of transmissive optical modulation element)

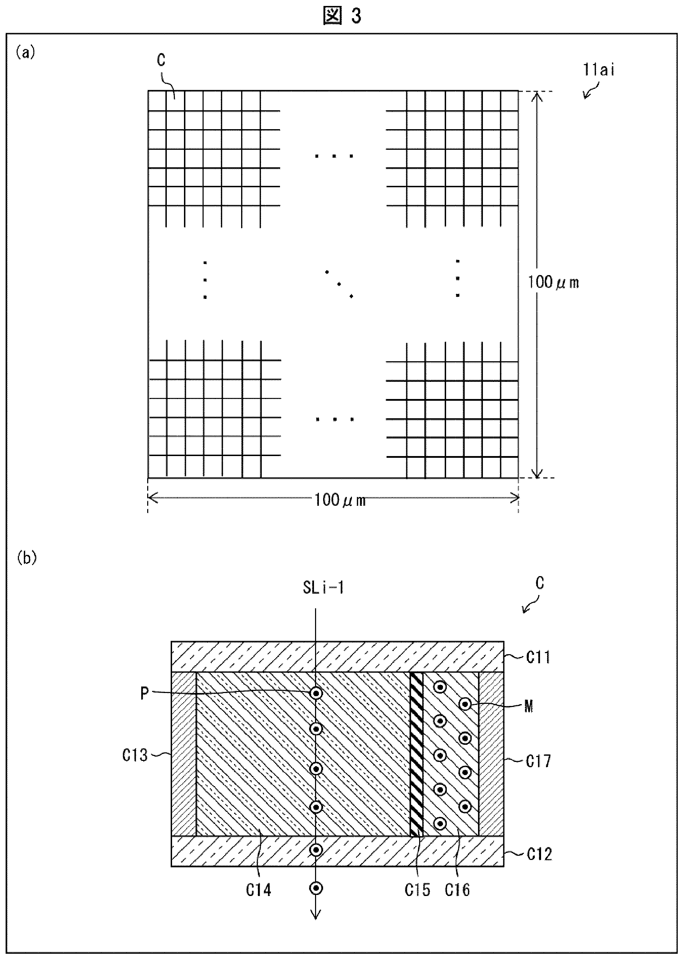

With reference to Fig. 3, the following description will discuss a configuration example of the optical modulation element 11ai included in the optical computing device 1. (a) of Fig. 3 is a plan view illustrating an optical modulation element 11ai in accordance with the present specific example. (b) of Fig. 3 is a cross-sectional view illustrating a cell C included in the optical modulation element 11ai in accordance with the present specific example.

As illustrated in (a) of Fig. 3, the optical modulation element 11ai is constituted by a plurality of cells C having respective phase modulation amounts that are set independently of each other. When a signal light SLi-1 enters the optical modulation element 11ai, the signal light SLi- 1 is transmitted through each cell C while being phase-modulated, and the beams of the signal light SLi-1 thus phase-modulated by the microcells C interfere with each other. Consequently, the signal light SLi indicating a result of computation is formed.

The cells C constituting the optical modulation element 11ai are microcells. Note that, here, the "microcell" refers to, for example, a cell having a cell size of less than 10 µm. The "cell size" refers to a square root of an area of a cell. For example, in a case where the microcell has a square shape in a plan view, the cell size of the microcell is a length of a side of the microcell. The lower limit of the cell size of the microcell is, for example, 1 nm.

The optical modulation element 11ai shown in (a) of Fig. 3 as an example is constituted by 200 × 200 cells C arranged in matrix. A shape of each cell C in a plan view is a square of 500 nm × 500 nm. A shape of the optical modulation element 11ai in a plan view is a square of 100 µm × 100 µm. In this case, the signal light SLi-1 that has been transmitted through the gap between cells C or a peripheral portion of a cell C without being phase-modulated by each of the cells C becomes a noise light.

For example, as illustrated in (b) of Fig. 3, each cell C constituting the optical modulation element 11ai may be constituted by a polarizing plate C11, a polarizing plate C12, a first electrode C13, a magnetization free layer C14, an insulating layer C15, a magnetization fixed layer C16, and a second electrode C17.

The polarizing plate C11 and the polarizing plate C12 are disposed so as to face each other. The first electrode C13, the magnetization free layer C14, the insulating layer C15, the magnetization fixed layer C16, and the second electrode C17 are stacked in this order, and are sandwiched between the polarizing plate C11 and the polarizing plate C12. Here, a direction in which the first electrode C13, the magnetization free layer C14, the insulating layer C15, the magnetization fixed layer C16, and the second electrode C17 are stacked is orthogonal to a direction in which the polarizing plate C11 and the reflecting plate C12 are stacked. Thus, a first side surface of the magnetization free layer C14 is in surface contact with one of main surfaces of the first polarizing plate C11, and a second side surface of the magnetization free layer C14 which faces the first side surface is in surface contact with one of main surfaces of the reflecting plate C12. The signal light SLi-1 (1) enters an inside of the magnetization free layer C14 through the polarizing plate C11, (2) is transmitted through the magnetization free layer C14, and (3) is emitted through the polarizing plate C12 to an outside of the magnetization free layer C14.

The magnetization free layer C14 is made of, for example, an electrically conductive, light-transmissive, soft magnetic material (for example, CoFeB). The magnetization fixed layer C16 is made of, for example, an electrically conductive hard magnetic material (for example, permalloy). Selected as each of the polarizing plates C11 and C12 is a polarizing plate that selectively transmits a polarized light component having a polarization direction P parallel to a magnetization direction M of the magnetization fixed layer C16. (b) of Fig. 3 illustrates, as an example, a case where the magnetization direction M and the polarization direction P are parallel to both a main surface of the polarizing plate C11 and a main surface of the magnetization fixed layer C16.

When a potential difference is provided between the first electrode C13 and the second electrode C17, a tunnel effect occurs and injects a spin current (a flow of spin-polarized electrons) from the magnetization fixed layer C16 through the insulating layer C15 into the magnetization free layer C14 to magnetize the magnetization free layer C14. Here, the magnetization occurring in the magnetization free layer C14 is magnetization parallel to the magnetization direction M of the magnetization fixed layer C16, that is, magnetization parallel to the polarization direction P of the signal light SLi-1 entering the magnetization free layer C14 through the polarizing plate C11. This causes a phase of the signal light SLi-1 to be delayed by a transverse Kerr effect during a process of transmission in the magnetization free layer C14.

Here, a phase shift amount of the signal light SLi- 1 in the cell C is determined depending on a magnitude of the magnetization in the magnetization free layer C14. The magnitude of the magnetization in the magnetization free layer C14 is determined depending on a magnitude of the spin current injected into the magnetization free layer C14. The magnitude of the spin current injected into the magnetization free layer C14 is determined depending on the potential difference provided between the first electrode C13 and the second electrode C17. Thus, controlling the potential difference provided between the first electrode C13 and the second electrode C17 enables the phase modulation amount of the cell C to be set to a desired value.

The description of the present configuration example has dealt with the cell C having a similar configuration to that of a spin transfer torque (STT) magnetoresistive random access memory (MRAM). However, this is not limitative. For example, a cell C having a similar configuration to that of a spin orbit torque (SOT) MRAM may be used. Note that such a cell C can be achieved by, for example, removing the insulating layer C15, the magnetization fixed layer C16, and the second electrode C17 from the structure illustrated in (b) of Fig. 3. In this case, for example, causing the first electrode C13 to contain heavy metal and providing a pulse voltage or a pulse current to the first electrode C13 enables the spin current to be efficiently injected into the magnetization free layer C14.

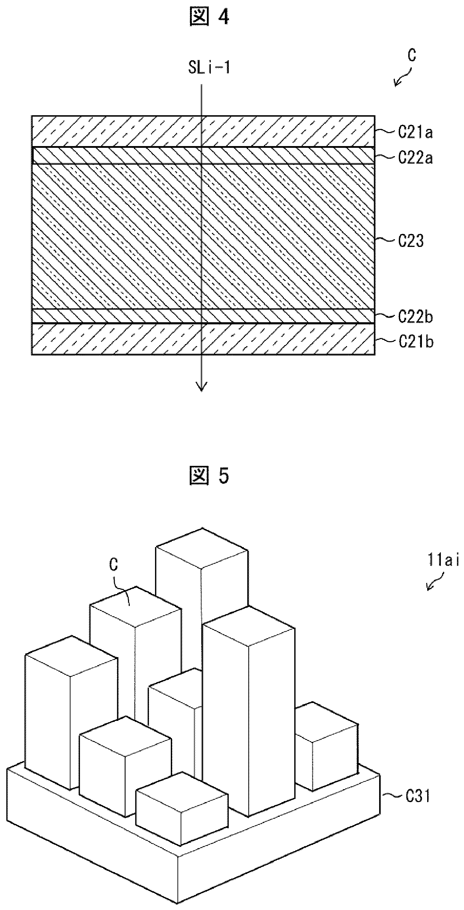

Further, the cell C can be configured in a similar manner to a cell of a liquid crystal display (LCD). In this case, the cell C includes, for example, a first glass substrate C21a, a first transparent electrode C22a, a liquid crystal layer C23, a second transparent electrode C22b, and a second glass substrate C21b as illustrated in Fig. 4. The first glass substrate C21a, the first transparent electrode C22a, the liquid crystal layer C23, the second transparent electrode C22b, and the second glass substrate C21b are stacked in this order from a side from which the signal light SLi- 1 enters.

The signal light SLi-1 (1) is transmitted through the first glass substrate C21a and the first transparent electrode C22a, (2) is transmitted through the liquid crystal layer C23, and (3) is transmitted through the second transparent electrode C22b and the second glass substrate C21b. The liquid crystal layer C23 is made of liquid crystal molecules oriented in a direction parallel to main surfaces of the glass substrate C21, and has a refractive index according to a potential difference between the first transparent electrode C22a and the second transparent electrode C22b. As such, the signal light SLi-1 is phase-modulated when transmitted through the liquid crystal layer C23. A phase modulation amount of the cell C can be set to a desired value by controlling a potential difference provided between the first transparent electrode C22a and the second transparent electrode C22b.

Note that the optical modulation element 11ai also may be constituted by a plurality of cells C having thicknesses set independently of each other. Fig. 5 is an enlarged perspective view illustrating a part of the optical modulation element 11ai constituted by a plurality of cells C having thicknesses set independently of each other.

The optical modulation element 11ai illustrated in Fig. 5 is constituted by a transparent substrate C31 and a plurality of pillars provided on an upper surface of the transparent substrate C31. Each of the pillars is a quadrangular prism-shaped structure having a square bottom surface with the sides that are each equal to the cell size, and serves as the cell C. In this case, the signal light SLi-1 that has been transmitted through a space between the pillars constituting the cells C (a peripheral portion of each cell in which no pillar is formed) without being phase-modulated by each of the cells C becomes a noise light.

The signal light SLi (1) enters an upper surface of the pillar, (2) is transmitted through the pillar, (3) is transmitted through the transparent substrate C31, and (4) is emitted from the lower surface of the transparent substrate C31. The phase modulation amount of the signal light SLi transmitted through each cell C is determined depending on a height of the pillar constituting the cell C. That is, as the height of the pillar constituting the cell C increases, the phase modulation amount of the signal light SLi transmitted through the cell C increases, and as the height of the pillar constituting the cell C decreases, the phase modulation amount of the signal light SLi transmitted through the cell C decreases. Note that each of the cells C has a fixed phase modulation amount.

### [Embodiment 2]

### (Configuration of optical computing device)

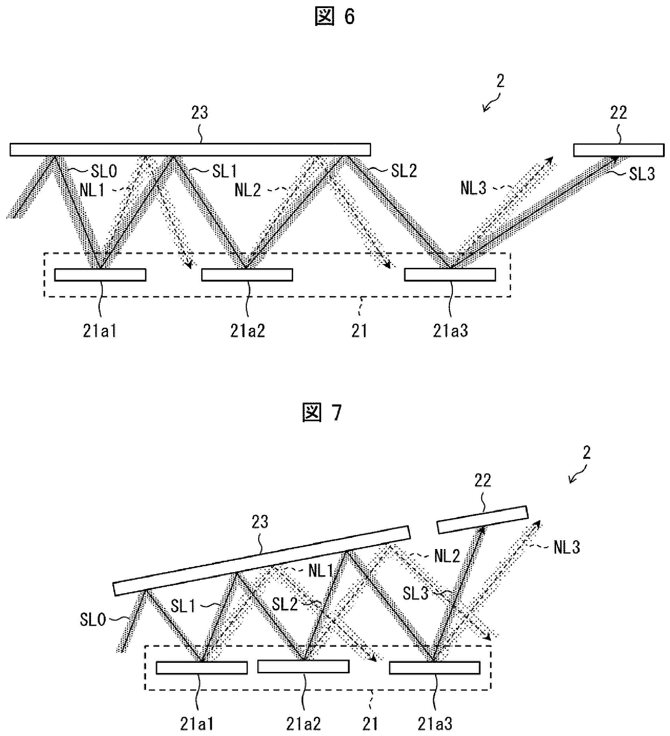

With reference to Fig. 6, the following description will discuss a configuration of an optical computing device 2 in accordance with Embodiment 2 of the present invention. Fig. 6 is a side view illustrating a configuration of the optical computing device 2.

As illustrated in Fig. 6, the optical computing device 2 includes an optical computing section 21, an image sensor 22, and a mirror 23.

The optical computing section 21 is a set of one or more optical modulation elements 21a1 to 21an (n is a natural number of not less than 1). In the present embodiment, in order to realize multiple-stage optical computing, a set of three optical modulation elements 21a1 to 21a3 is used as the optical computing section 21. The optical modulation elements 21a1 to 21an may be integrated together. For example, n light diffraction layers formed in a structure that transmits a signal light, such as a dried gel, may be used as the optical modulation elements 21a1 to 21an. Alternatively, the optical modulation elements 21a1 to 21an may be embedded in a single substrate, or n regions of a single optical modulation element may be used as the optical modulation elements 21a1 to 21an.

Each of the optical modulation elements 21ai (i is a natural number of not less than 1 and not more than n) is constituted by a plurality of cells having phase modulation amounts capable of being set independently of each other. Each of the optical modulation elements 21ai is a reflective optical modulation element and is configured to carry out optical computing by causing reflected light beams that have been phase-modulated by the cells to interfere with each other. Note here that "carrying out optical computing" means to convert a two-dimensional intensity distribution of a signal light, from a two-dimensional intensity distribution representing information before computing into a two-dimensional intensity distribution representing information after the computing. A configuration example of the reflective optical modulation element will be described later with reference to a different drawing.

In addition to the above-described signal light, the optical modulation element 21ai emits a noise light that has been transmitted through the optical modulation element 21ai without being phase-modulated by each of the cells. For example, the light that has been reflected on the surface of the optical modulation element 21ai without entering an inside of each cell constituting the optical modulation element 21ai becomes a noise light. The optical axis of the noise light emitted from the optical modulation element 21ai is located in a plane including the optical axis of the signal light that enters the optical modulation element 21ai and the normal of the incidence surface of the optical modulation element 21ai, and an emission angle of the noise light that is emitted from the optical modulation element 21ai agrees with an incidence angle at which the signal light enters the optical modulation element 21ai. That is, the optical axis of the noise light agrees with the optical axis of the reflected light assumed in a case where the signal light is regularly reflected by the optical modulation element 21ai.

In order to separate such a noise light from the signal light, the phase modulation amounts of the cells constituting the optical modulation element 21ai are set so that a direction in which the signal light is emitted from the optical modulation element 21ai differs from a direction in which the noise light is emitted from the optical modulation element 21ai. In the reflective optical modulation element, for example, an emission angle of a noise light is the same as an incidence angle of incident light. Therefore, the phase modulation amounts of the cells are set so as to prevent the emission angle of the signal light from being the same as the incidence angle of the incident light.

The mirror 23 is means for reflecting the signal lights SL1 to SL3 that are emitted from the optical modulation elements 21a1 to 21a3 and is disposed so that the reflecting surface thereof faces the incidence/emission surfaces of the optical modulation elements 21a1 to 21a3.

In the present embodiment, the signal light SL0 obliquely enters the first optical modulation element 21a1. The first optical modulation element 21a1 obliquely emits the noise light NL1 and the signal light SL1 in different directions. The noise light NL1 and the signal light SL1 emitted from the first optical modulation element 21a1 are each reflected by the mirror 23. The second optical modulation element 21a2 is disposed so as to (1) allow the incidence/emission surface thereof and the incidence/emission surface of the first optical modulation element 21a1 to be located in the same plane, (2) allow the incidence/emission surface thereof to cross the signal light SL1 that has been reflected by the mirror 23, and (3) prevent the incidence/emission surface thereof from crossing the optical axis of the noise light NL1 that has been reflected by the mirror 23. Note that a condition that the optical axis of the noise light NL1 that has been emitted from the first optical modulation element 21a1 is prevented from crossing a point at which the incidence/emission surface of the second optical modulation element 21a2 crosses the signal light SL1 that has been emitted from the first optical modulation element 21a1 may be imposed instead of imposing the above condition (3). Alternatively, a condition that at least part of the noise light NL1 that has been emitted from the first optical modulation element 21a1 is prevented from entering the incidence/emission surface of the second optical modulation element 21a2 may be imposed.

In the present embodiment, the second optical modulation element 21a2 obliquely emits the noise light NL2 and the signal light SL2 in different directions. The noise light NL2 and the signal light SL2 that have been emitted from the second optical modulation element 21a2 are each reflected by the mirror 23. The third optical modulation element 21a3 is disposed so as to (1) allow the incidence/emission surface thereof and the incidence/emission surface of the second optical modulation element 21a2 to be located in the same plane, (2) allow the incidence/emission surface thereof to cross the signal light SL2 that has been reflected by the mirror 23, and (3) prevent the incidence/emission surface thereof from crossing the optical axis of the noise light NL2 that has been reflected by the mirror 23. Note that a condition that the optical axis of the noise light NL2 that has been emitted from the second optical modulation element 21a2 is prevented from crossing a point at which the incidence/emission surface of the third optical modulation element 21a3 crosses the signal light SL2 that has been emitted from the second optical modulation element 21a2 may be imposed instead of imposing the above condition (3). Alternatively, a condition that at least part of the noise light NL2 that has been emitted from the second optical modulation element 21a2 is prevented from entering the incidence surface of the third optical modulation element 21a3 may be imposed. The third optical modulation element 21a3 obliquely emits the noise light NL3 and the signal light SL3 in different directions. The optical axes of the signal lights SL0 to SL3 and the optical axes of the noise lights NL1 to NL3 are located in the same plane.

The image sensor 22 is one example of an optical sensor, which is means for detecting the signal light SL3 that has been outputted from the optical computing section 21 and generating an electrical signal indicating a result of the detection. In order to generate an electrical signal indicating an intensity distribution of the signal light SL3 that has been emitted from the optical computing section 21, the image sensor 22 is constituted by a plurality of photoelectric conversion units. The image sensor 22 is disposed so as to (1) allow the incidence surface thereof and the reflecting surface of the mirror 23 to be located in the same plane, (2) allow the incidence surface thereof to cross the optical axis of the signal light SL3 that has been emitted from the optical computing section 21, and (3) prevent the incidence surface thereof from crossing the optical axes of the noise lights NL1 to NL3 that have been emitted from the optical computing section 21.

The above arrangement of the optical modulation elements 21a1 to 21a3, the image sensor 22, and the mirror 23 makes it possible to prevent all the photoelectric conversion units constituting the image sensor 22 from entering a situation where the noise lights NL1 to NL3 enter the photoelectric conversion units at intensities of not less than detection limits thereof. This reduces the impacts of the noise lights NL1 to NL3 on the electrical signal generated by the image sensor 22 to be smaller than that of the conventional optical computing device in which a signal light SLi and a noise light NLi are emitted in the same direction from each optical modulation element 21ai. Instead of imposing a condition that (a certain point of) the incidence surface of the image sensor 22 is prevented from crossing the optical axes of the noise lights NL1 to NL3, a condition (a less strict condition) that points at which the optical axes of the signal lights SL1 to SL3 cross the incidence surface of the image sensor 22 differ from points at which the optical axes of the noise lights NL1 to NL3 cross the incidence surface of the image sensor 22 may be imposed. Also in this case, it is possible to reduce the intensities of the noise lights NL1 to NL3 that enter the image sensor 22, compared with the conventional configuration in which the center of the incidence surface of the image sensor 22 crosses the optical axes of the noise lights NL1 to NL3. This makes it possible to suppress the impacts of the noise lights NL1 to NL3 on the electrical signal generated by the image sensor 22. This also holds true when a condition that at least part of the noise lights NL1 to NL3 is prevented from entering the incidence surface of the image sensor 22 is imposed.

Note that the present embodiment employs an arrangement in which all the photoelectric conversion units constituting the image sensor 22 are located so as to prevent the noise lights NL1 to NL3 from entering the photoelectric conversion units at intensities of not less than detection limits thereof, but the present invention is not limited to this. For example, it is also possible to employ an arrangement in which among the photoelectric conversion units constituting the image sensor 22, a photoelectric conversion unit that the signal light SL3 enters at an intensity of not less than a detection limit thereof is located so as to prevent each of the noise lights NL1 to NL3 from entering the photoelectric conversion unit at an intensity of not less than the detection limit. Also in this case, it is possible to reduce the impacts of the noise lights NL1 to NL3 on the electrical signal generated by the image sensor 22 to be smaller than that of the conventional optical computing device.

The present embodiment employs a configuration in which the signal light SL0 that has been subjected to two-dimensional intensity modulation with use of input data is inputted to the optical computing section 21, but the present invention is not limited to this. That is, it is also possible to employ a configuration in which the carrier light is inputted to the optical computing section 21, and the signal light SL1 that has been two-dimensionally modulated with use of input data by the optical modulation element 21a1 is generated. The optical computing device 2 may further include a display configured to generate the signal light SL0 or a light source configured to generate a carrier light.

Note that the phase modulation amount of each cell of the optical modulation element 21ai can be set, for example, through machine learning. A model used in this machine learning can be, for example, a model in which a two-dimensional intensity distribution of the signal light SL0 that enters the optical modulation element 21a1 is an input, and a two-dimensional intensity distribution of the signal light SL3 that enters the image sensor 22 is an output and which includes a phase modulation amount of each cell of the optical modulation element 21ai as a parameter. Note here that the two-dimensional intensity distribution of the signal light SL0 inputted to the optical modulation element 21a1 means, for example, a set of intensities of the beams of the signal light SL0 that enter the respective cells constituting the optical modulation element 21a1. The two-dimensional intensity distribution of the signal light SL3 entering the image sensor 22 refers to, for example, a set of intensities of the beams of the signal light SL3 that enter the respective photoelectric conversion units constituting the image sensor 22.

In a case where the optical computing section 21 includes an optical modulation element 21ai having a variable phase modulation amount of each cell, the optical computing device 2 may include a control section that sets a phase modulation amount of each cell of the optical modulation element 21ai. This makes it possible to change the contents of optical computing carried out by the optical computing device 1.

Alternatively, as described above, n regions of a single optical modulation element may be used as the optical modulation elements 21a1 to 21an. That is, with n computing regions A1, A2, ... , AN set in a single optical modulation element, the computing region A1 may carry out optical computing by modulating and reflecting incident light, and each computing region Ai (i is each natural number of not less than 2 and not more than N) other than the computing region A1 may carry out optical computing by modulating and reflecting the signal light that has been modulated and reflected by the computing region Ai-1 and then reflected by the mirror 23.

In a case where n light diffraction layers formed in a dried gel are used as the optical modulation elements 21a1 to 21an, it is preferable to use a gel that is subjected to dehydration shrinkage so that the gel shrinks while keeping a similar shape, e.g., a gel used in the Implosion Fabrication process. This makes it possible to, by drying a swollen gel in which n light diffraction layers are formed, easily manufacture the optical computing section 21 in which the n light diffraction layers are disposed with high precision.

### (Variation 1 of optical computing device)

With reference to Fig. 7, the following description will discuss a first variation of the optical computing device 2. Fig. 7 is a side view illustrating a configuration of the optical computing device 2 in accordance with the present variation (hereinafter, referred to as "optical computing device 2A").

As with the optical computing device 2, the optical computing device 2A includes the optical computing section 21, the image sensor 22, and the mirror 23. A difference between the optical computing device 2A and the optical computing device 2 is the positions of the optical modulation elements 21a1 to 21a3, the position and the orientation of the image sensor 22, and the orientation of the mirror 23.

In the optical computing device 2, the mirror 23 is disposed so as to allow the reflecting surface thereof to be parallel to the incidence/emission surfaces of the optical modulation elements 21a1 to 21a3. In contrast, in the optical computing device 2A, the mirror 23 is disposed so as to allow the reflecting surface thereof to be nonparallel to the incidence/emission surfaces of the optical modulation elements 21a1 to 21a3. Further, in the optical computing device 2, the image sensor 22 is disposed so as to allow the incidence surface thereof to be parallel to the incidence/emission surfaces of the optical modulation elements 21a1 to 21a3. In contrast, in the optical computing device 2A, the image sensor 22 is disposed so as to allow the incidence surface thereof to be nonparallel to the incidence/emission surfaces of the optical modulation elements 21a1 to 21a3. The feature that the incidence surface of the image sensor 22 and the reflecting surface of the mirror 23 are located in the same plane is common to the optical computing device 2 and the optical computing device 2A.

Also in the present variation, the signal light SL0 obliquely enters the first optical modulation element 21a1. The first optical modulation element 21a1 obliquely emits the noise light NL1 and the signal light SL1 in different directions. The noise light NL1 and the signal light SL1 emitted from the first optical modulation element 21a1 are each reflected by the mirror 23. The second optical modulation element 21a2 is disposed so as to (1) allow the incidence/emission surface thereof and the incidence/emission surface of the first optical modulation element 21a1 to be located in the same plane, (2) allow the incidence/emission surface thereof to cross the signal light SL1 that has been reflected by the mirror 23, and (3) prevent the incidence/emission surface thereof from crossing the optical axis of the noise light NL1 that has been reflected by the mirror 23. The second optical modulation element 21a2 obliquely emits the noise light NL2 and the signal light SL2 in different directions. The noise light NL2 and the signal light SL2 that have been emitted from the second optical modulation element 21a2 are each reflected by the mirror 23. The third optical modulation element 21a3 is disposed so as to (1) allow the incidence/emission surface thereof and the incidence/emission surface of the second optical modulation element 21a2 to be located in the same plane, (2) allow the incidence/emission surface thereof to cross the signal light SL2 that has been reflected by the mirror 23, and (3) prevent the incidence/emission surface thereof from crossing the optical axis of the noise light NL2 that has been reflected by the mirror 23. The third optical modulation element 21a3 obliquely emits the noise light NL3 and the signal light SL3 in different directions. The image sensor 22 is disposed so as to (1) allow the incidence surface thereof and the reflecting surface of the mirror 23 to be located in the same plane, (2) allow the incidence surface thereof to cross the optical axis of the signal light SL3 that has been emitted from the optical computing section 21, and (3) prevent the incidence surface thereof from crossing the optical axes of the noise lights NL1 to NL3 that have been emitted from the optical computing section 21. The optical axes of the signal lights SL0 to SL3 and the optical axes of the noise lights NL1 to NL3 are located in the same plane.

The above arrangement of the optical modulation elements 21a1 to 21a3, the image sensor 22, and the mirror 23 makes it possible to prevent all the photoelectric conversion units constituting the image sensor 22 from entering a situation where the noise lights NL1 to NL3 enter the photoelectric conversion units at intensities of not less than detection limits thereof. This reduces the impacts of the noise lights NL1 to NL3 on the electrical signal generated by the image sensor 22 to be smaller than that of the conventional optical computing device in which a signal light SLi and a noise light NLi are emitted in the same direction from each optical modulation element 21ai. Moreover, the present variation makes it possible to make the incidence angles of the signal light SL0 to SL2 on the optical modulation elements 21a1 to 21a3 common and make the emission angles of the signal lights SL1 to SL3 from the optical modulation elements 21a1 to 21a3 common. This facilitates design and manufacture of the optical modulation elements 21a1 to 21a3.

### (Variation 2 of optical computing device)

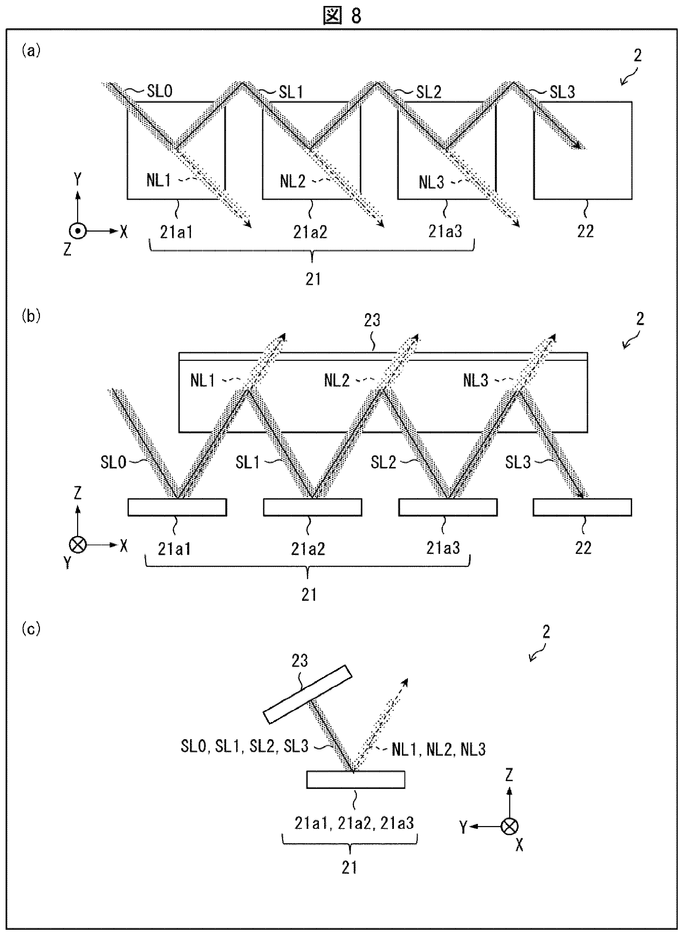

With reference to Fig. 8, the following description will discuss a second variation of the optical computing device 2. In Fig. 8, (a) is a top view illustrating an optical computing device 2 in accordance with the present variation (hereinafter, referred to as "optical computing device 2B"), (b) is a side view illustrating the optical computing device 2B, and (c) is a front view illustrating the optical computing device 2B. In (a) of Fig. 8, the mirror 23 is not illustrated.

As with the optical computing device 2, the optical computing device 2B includes the optical computing section 21, the image sensor 22, and the mirror 23. A first difference between the optical computing device 2A and the optical computing device 2 is the positions of the optical modulation elements 21a1 to 21a3, the position and the orientation of the image sensor 22, and the position and the orientation of the mirror 23. A second difference between the optical computing device 2A and the optical computing device 2 is the emission direction of the signal light SLi from each optical modulation element 21ai.

In the optical computing device 2, the mirror 23 is disposed so as to allow the reflecting surface thereof to be parallel to the incidence/emission surfaces of the optical modulation elements 21a1 to 21a3. In contrast, in the optical computing device 2B, the mirror 23 is disposed so as to allow the reflecting surface thereof to be nonparallel to the incidence/emission surfaces of the optical modulation elements 21a1 to 21a3. In the optical computing device 2, the image sensor 22 is disposed so as to allow the incidence surface thereof and the reflecting surface of the mirror 23 to be located in the same plane, whereas in the optical computing device 2B, the image sensor 22 is disposed so as to allow the incidence surface thereof and the incidence/emission surfaces of the optical modulation elements 21a1 to 21a3 to be located in the same plane.

In the optical computing device 2, the optical axis of the signal light SLi that is emitted from each optical modulation element 21ai is located in a plane including the optical axis of the signal light SLi-1 that enters the optical modulation element 21ai and the optical axis of the noise light NLi that is emitted from the optical modulation element 21ai. In contrast, in the optical computing device 2, the optical axis of the signal light SLi that is emitted from each optical modulation element 21ai is located outside a plane including the optical axis of the signal light SLi- 1 that enters the optical modulation element 21ai and the optical axis of the noise light NLi that is emitted from the optical modulation element 21ai.

Also in the present variation, the signal light SL0 obliquely enters the first optical modulation element 21a1. The first optical modulation element 21a1 obliquely emits the noise light NL1 and the signal light SL1 in different directions. The noise light NL1 and the signal light SL1 emitted from the first optical modulation element 21a1 are each reflected by the mirror 23. The second optical modulation element 21a2 is disposed so as to (1) allow the incidence/emission surface thereof and the incidence/emission surface of the first optical modulation element 21a1 to be located in the same plane, (2) allow the incidence/emission surface thereof to cross the signal light SL1 that has been reflected by the mirror 23, and (3) prevent the incidence/emission surface thereof from crossing the optical axis of the noise light NL1 that has been reflected by the mirror 23. The second optical modulation element 21a2 obliquely emits the noise light NL2 and the signal light SL2 in different directions. The noise light NL2 and the signal light SL2 that have been emitted from the second optical modulation element 21a2 are each reflected by the mirror 23. The third optical modulation element 21a3 is disposed so as to (1) allow the incidence/emission surface thereof and the incidence/emission surface of the second optical modulation element 21a2 to be located in the same plane, (2) allow the incidence/emission surface thereof to cross the signal light SL2 that has been reflected by the mirror 23, and (3) prevent the incidence/emission surface thereof from crossing the optical axis of the noise light NL2 that has been reflected by the mirror 23. The third optical modulation element 21a3 obliquely emits the noise light NL3 and the signal light SL3 in different directions. The noise light NL3 and the signal light SL3 that have been emitted from the third optical modulation element 21a3 are each reflected by the mirror 23. The image sensor 22 is disposed so as to (1) allow the incidence surface thereof and the reflecting surface of the mirror 23 to be located in the same plane, (2) allow the incidence surface thereof to cross the optical axis of the signal light SL3 that has been reflected by the mirror 23, and (3) prevent the incidence surface thereof from crossing the optical axes of the noise lights NL1 to NL3 that have been reflected by the mirror 23.

The above arrangement of the optical modulation elements 21a1 to 21a3, the image sensor 22, and the mirror 23 makes it possible to prevent all the photoelectric conversion units constituting the image sensor 22 from entering a situation where the noise lights NL1 to NL3 enter the photoelectric conversion units at intensities of not less than detection limits thereof. This reduces the impacts of the noise lights NL1 to NL3 on the electrical signal generated by the image sensor 22 to be smaller than that of the conventional optical computing device in which a signal light SLi and a noise light NLi are emitted in the same direction from each optical modulation element 21ai. Moreover, the present variation makes it possible to make the incidence angles of the signal light SL0 to SL2 on the optical modulation elements 21a1 to 21a3 common and make the emission angles of the signal lights SL1 to SL3 from the optical modulation elements 21a1 to 21a3 common. This facilitates design and manufacture of the optical modulation elements 21a1 to 21a3.

### (Configuration example of reflective optical modulation element)

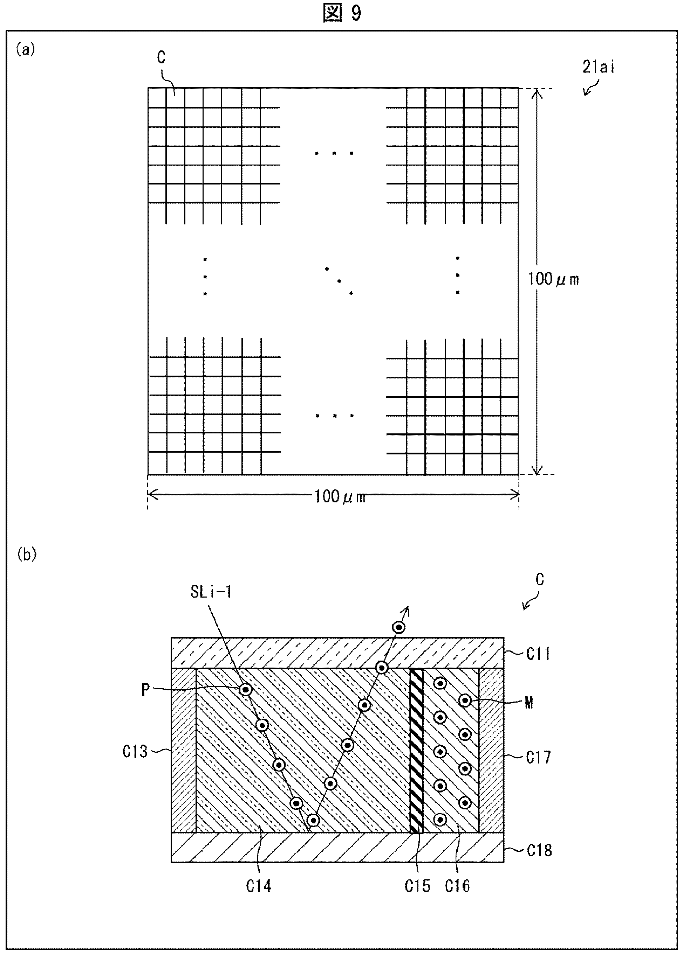

With reference to Fig. 9, the following description will discuss a configuration example of a reflective optical modulation element 21ai included in the optical computing device 1. (a) of Fig. 9 is a plan view illustrating an optical modulation element 21ai in accordance with the present specific example. (b) of Fig. 9 is a cross-sectional view illustrating a cell C included in the optical modulation element 21ai in accordance with the present specific example.

As illustrated in (a) of Fig. 9, the optical modulation element 21ai is constituted by a plurality of cells C having respective phase modulation amounts that are set independently of each other. When the signal light SLi- 1 enters the optical modulation element 21ai, the signal light SLi-1 is reflected by each cell C while being phase-modulated, and the beams of the signal light SLi-1 thus phase-modulated by the microcells C interfere with each other. Consequently, the signal light SLi indicating a result of computation is formed.

The cells C constituting the optical modulation element 21ai are microcells. Note that, here, the "microcell" refers to, for example, a cell having a cell size of less than 10 µm. The "cell size" refers to a square root of an area of a cell. For example, in a case where the microcell has a square shape in a plan view, the cell size of the microcell is a length of a side of the microcell. The lower limit of the cell size of the microcell is, for example, 1 nm.

The optical modulation element 21ai illustrated in (a) of Fig. 9 is constituted by 200 × 200 cells C arranged in a matrix. Each of the cells C has a square shape having a size of 500 nm × 500 nm in a plan view. The optical modulation element 21ai has a square shape having a size of 100 µm × 100 µm in a plan view.

For example, as illustrated in (b) of Fig. 9, each cell C constituting the optical modulation element 21ai may be constituted by a polarizing plate C11, a reflecting plate C18, a first electrode C13, a magnetization free layer C14, an insulating layer C15, a magnetization fixed layer C16, and a second electrode C17. In this case, the signal light SLi-1 that has been reflected by the surface of the polarizing plate C11 becomes a noise light.

The polarizing plate C11 and the reflecting plate C18 are disposed so as to face each other. The first electrode C13, the magnetization free layer C14, the insulating layer C15, the magnetization fixed layer C16, and the second electrode C17 are stacked in this order, and are sandwiched between the polarizing plate C11 and the reflecting plate C18. Here, a direction in which the first electrode C13, the magnetization free layer C14, the insulating layer C15, the magnetization fixed layer C16, and the second electrode C17 are stacked is orthogonal to a direction in which the polarizing plate C11 and the reflecting plate C18 are stacked. Thus, a first side surface of the magnetization free layer C14 is in surface contact with one of main surfaces of the first polarizing plate C11, and a second side surface of the magnetization free layer C14 which faces the first side surface is in surface contact with one of main surfaces of the reflecting plate C18. The Signal light SLi-1 (1) enters an inside of the magnetization free layer C14 through the polarizing plate C11, (2) is reflected by the reflecting plate C18, and (3) is emitted through the polarizing plate C11 to an outside of the magnetization free layer C14.

The magnetization free layer C14 is made of, for example, an electrically conductive, light-transmissive, soft magnetic material (for example, CoFeB). The magnetization fixed layer C16 is made of, for example, an electrically conductive hard magnetic material (for example, permalloy). Selected as the polarizing plate C11 is a polarizing plate that selectively transmits a polarized light component having a polarization direction P parallel to a magnetization direction M of the magnetization fixed layer C16. (b) of Fig. 9 illustrates, as an example, a case where the magnetization direction M and the polarization direction P are parallel to both a main surface of the polarizing plate C11 and a main surface of the magnetization fixed layer C16.

When a potential difference is provided between the first electrode C13 and the second electrode C17, a tunnel effect occurs and injects a spin current (a flow of spin-polarized electrons) from the magnetization fixed layer C16 through the insulating layer C15 into the magnetization free layer C14 to magnetize the magnetization free layer C14. Here, the magnetization occurring in the magnetization free layer C14 is magnetization parallel to the magnetization direction M of the magnetization fixed layer C16, that is, magnetization parallel to the polarization direction P of the signal light SLi-1 entering the magnetization free layer C14 through the polarizing plate C11. This causes a phase of the signal light SLi-1 to be delayed by a transverse Kerr effect during a process of transmission in the magnetization free layer C14.

Here, a phase shift amount of the signal light SLi- 1 in the cell C is determined depending on a magnitude of the magnetization in the magnetization free layer C14. The magnitude of the magnetization in the magnetization free layer C14 is determined depending on a magnitude of the spin current injected into the magnetization free layer C14. The magnitude of the spin current injected into the magnetization free layer C14 is determined depending on the potential difference provided between the first electrode C13 and the second electrode C17. Thus, controlling the potential difference provided between the first electrode C13 and the second electrode C17 enables the phase modulation of the cell C to be set to a desired value.

The description of the present configuration example has dealt with the cell C having a similar configuration to that of a spin transfer torque (STT) magnetoresistive random access memory (MRAM). However, this is not limitative. For example, a cell C having a similar configuration to that of a spin orbit torque (SOT) MRAM may be used. Note that such a cell C can be achieved by, for example, removing the insulating layer C15, the magnetization fixed layer C16, and the second electrode C17 from the structure illustrated in (b) of Fig. 9. In this case, for example, causing the first electrode C13 to contain heavy metal and providing a pulse voltage or a pulse current to the first electrode C13 enables the spin current to be efficiently injected into the magnetization free layer C14.

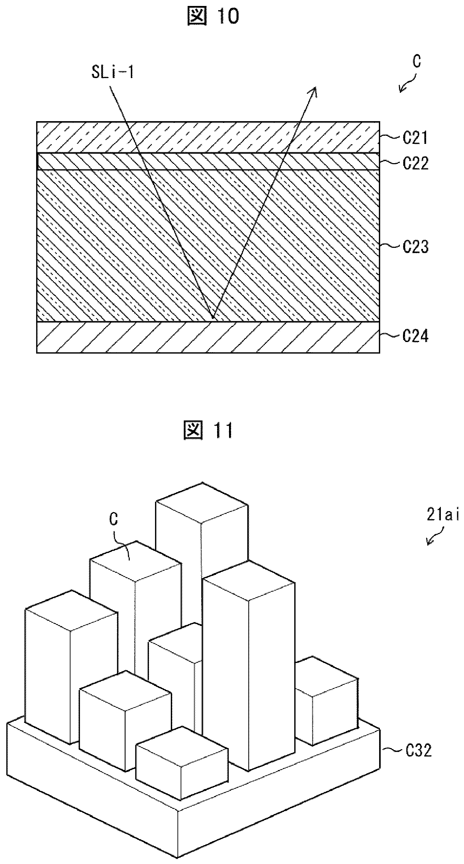

Further, the cell C may be configured in a similar manner to a cell of a liquid crystal on silicon (LCOS). In this case, the cell C includes, for example, a glass substrate C21, a transparent electrode C22, a liquid crystal layer C23, and a reflective electrode C24 as illustrated in Fig. 10. The glass substrate C21, the transparent electrode C22, the liquid crystal layer C23, and the reflective electrode C24 are stacked in this order from a side from which the signal light SLi- 1 enters.

The signal light SLi-1 (1) is transmitted through the glass substrate C21 and the transparent electrode C22, (2) is transmitted through the liquid crystal layer C23, (3) is reflected by the reflective electrode C24, (4) is transmitted through the liquid crystal layer C23, and (5) is transmitted through the transparent electrode C22 and the glass substrate C21. The liquid crystal layer C23 is made of liquid crystal molecules oriented in a direction parallel to main surfaces of the glass substrate C21, and has a refractive index according to a potential difference between the transparent electrode C22 and the reflective electrode C24. As such, the signal light SLi-1 is phase-modulated when transmitted through the liquid crystal layer C23. A phase modulation amount of the cell C can be set to a desired value by controlling a potential difference provided between the transparent electrode C22 and the reflective electrode C24.

Note that the reflective optical modulation element 21ai also may be constituted by a plurality of cells C having thicknesses set independently of each other. Fig. 11 is an enlarged perspective view illustrating a part of the optical modulation element 21ai constituted by a plurality of cells C having thicknesses set independently of each other.

The optical modulation element 21ai illustrated in Fig. 11 is constituted by a reflecting plate C32 and a plurality of pillars provided on an upper surface of the reflecting plate C32. Each of the pillars is a quadrangular prism-shaped structure having a square bottom surface with the sides that are each equal to the cell size, and serves as the cell C. In this case, in a region in which the pillar is formed, the signal light SLi-1 that has been reflected on the upper surface of the pillar becomes a noise light. In a region where no pillar is formed, the signal light SLi-1 that has been reflected on the upper surface of the reflecting plate 32 becomes a noise light.

The signal light SLi-1 (1) enters an upper surface of the pillar, (2) is transmitted through the pillar, (3) is reflected by the reflecting plate C32, (4) is emitted through the pillar, and (5) is emitted from the upper surface of the pillar. The phase modulation amount of the signal light SLi-1 reflected by each cell C is determined depending on a height of the pillar constituting the cell C. That is, as the height of the pillar constituting the cell C increases, the phase modulation amount of the signal light SLi-1 reflected by the cell C increases, and as the height of the pillar constituting the cell C decreases, the phase modulation amount of the signal light reflected by the cell C decreases. Note that each of the cells C has a fixed phase modulation amount.

Aspects of the present invention can also be expressed as follows:
An optical computing device in accordance with Aspect 1 of the present invention includes: an optical computing section including an optical modulation element having a plurality of cells having phase modulation amounts that are independently set or that are capable of being independently set; and an optical sensor configured to detect a signal light that has been outputted from the optical computing section and to generate an electrical signal indicating a result of detection, wherein the optical modulation element is (1) a transmissive optical modulation element configured to emit a signal light generated when transmitted light beams that have been phase-modulated by the plurality of cells interfere with each other and a noise light that has been transmitted through the optical modulation element without being phase-modulated by each of the plurality of cells or (2) a reflective optical modulation element configured to emit a signal light generated when reflected light beams that have been phase-modulated by the plurality of cells interfere with each other and a noise light that has been reflected by the optical modulation element without being phase-modulated by each of the plurality of cells, in the optical modulation element, the phase modulation amounts of the plurality of cells are set so that a direction in which the signal light is emitted from the optical modulation element differs from a direction in which the noise light is emitted from the optical modulation element, and an impact that the noise light has on the electrical signal is smaller than a case where the direction in which the signal light is emitted from the optical modulation element agrees with the direction in which the noise light is emitted from the optical modulation element.

According to the above configuration, it is possible to reduce an impact of the noise light on the electrical signal generated by the optical sensor.

In an optical computing device according to Aspect 2 of the present invention, in addition to the configuration of Aspect 1, a configuration is employed in which the optical sensor is an image sensor having a plurality of photoelectric conversion units, and the image sensor is disposed so as to prevent the noise light from entering a photoelectric conversion unit that the signal light enters at an intensity of not less than a detection limit thereof, at an intensity of not less than the detection limit.

According to the above configuration, it is possible to further reduce an impact of the noise light on the electrical signal generated by the image sensor.

In an optical computing device according to Aspect 3 of the present invention, in addition to the configuration of Aspect 2, a configuration is employed in which the image sensor is disposed so as to prevent the noise light from entering all the photoelectric conversion units at intensities of not less than detection limits thereof. Alternatively, in an optical computing device according to Aspect 3 of the present invention, in addition to the configuration of Aspect 1, a configuration is employed in which the optical sensor is disposed so as to (1) allow an incidence surface thereof to cross an optical axis of the signal light that has been emitted from the optical computing section and (2) prevent a point at which the incidence surface thereof crosses the optical axis of the signal light that has been emitted from the optical computing section from crossing an optical axis of the noise light that has been emitted from the optical computing section.

According to the above configuration, it is possible to still further reduce an impact of the noise light on the electrical signal generated by the image sensor.

In an optical computing device according to Aspect 4 of the present invention, in addition to the configuration of any one of Aspects 1 to 3, a configuration is employed in which the optical computing section includes at least a first transmissive optical modulation element as the optical modulation element and a second transmissive optical modulation element as the optical modulation element, and the second transmissive optical modulation element is disposed so as to (1) allow an incidence surface thereof to cross an optical axis of the signal light that has been emitted from the first transmissive optical modulation element and (2) prevent a point at which the incidence surface thereof crosses the optical axis of the signal light that has been emitted from the first transmissive optical modulation element from crossing an optical axis of the noise light that has been emitted from the first transmissive optical modulation element. In an optical computing device according to Aspect 5 of the present invention, in addition to the configuration of any one of Aspects 1 to 3, a configuration is employed in which the optical computing section includes a first transmissive optical modulation element as the optical modulation element and a second transmissive optical modulation element as the optical modulation element, and the second transmissive optical modulation element is disposed so as to (1) allow an incidence surface thereof to cross an optical axis of the signal light that has been emitted from the first transmissive optical modulation element and (2) prevent at least part of the noise light that has been emitted from the first transmissive optical modulation element from entering the incidence surface thereof.

According to the above configurations, it is possible to effectively reduce an impact of the noise light on the electrical signal generated by the optical sensor in a case where the optical modulation element is a transmissive optical modulation element

In an optical modulation element according to Aspect 6 of the present invention, in addition to the configuration of any one of Aspects 1 to 3, a configuration is employed in which the optical modulation element further includes a mirror, the optical computing section includes at least a first reflective optical modulation element as the optical modulation element and a second reflective optical modulation element as the optical modulation element, and the second reflective optical modulation element is disposed so as to (1) allow an incidence/emission surface thereof to cross an optical axis of the signal light that has been emitted from the first reflective optical modulation and reflected by the mirror and (2) prevent a point at which the incidence/emission surface thereof crosses the optical axis of the signal light that has been emitted from the first reflective optical modulation element and reflected by the mirror from crossing an optical axis of the noise light that has been emitted from the first reflective optical modulation element and reflected by the mirror or an optical axis of the noise light that has been emitted from the first reflective optical modulation element. In an optical modulation device according to Aspect 7 of the present invention, in addition to the configuration of any one of Aspects 1 to 3, a configuration is employed in which the optical modulation device further includes a mirror, the optical computing section includes a first reflective optical modulation element as the optical modulation element and a second reflective optical modulation element as the optical modulation element, and the second reflective optical modulation element is disposed so as to (1) allow an incidence/emission surface thereof to cross an optical axis of the signal light that has been emitted from the first reflective optical modulation element and reflected by the mirror and (2) prevent the noise light that has been emitted from the first reflective optical modulation element and reflected by the mirror or at least part of the noise light that has been emitted from the first reflective optical modulation element from entering the incidence/emission surface.

According to the above configurations, it is possible to effectively reduce an impact of the noise light on the electrical signal generated by the optical sensor in a case where the optical modulation element is a reflective optical modulation element.

In an optical computing device according to Aspect 8 of the present invention, in addition to the configuration of Aspect 6 or 7, a configuration is employed in which the mirror has a reflecting surface nonparallel to an incidence/emission surface of the first reflective optical modulation element and the incidence/emission surface of the second reflective optical modulation element.

According to the above configuration, it is possible to make the incidence angle of signal light on the first reflective optical modulation element and the incidence angle of signal light on the second reflective optical modulation element common and to make the emission angle of the signal light from the first reflective optical modulation element and the emission angle of the signal light from the second reflective optical modulation element common. This facilitates design and manufacture of the optical computing device.

In an optical computing device according to Aspect 9 of the present invention, in addition to the configuration of Aspect 6 or 7, a configuration is employed in which the optical computing section is constituted by a single optical modulation element in which regions functioning as the first reflective optical modulation element and the second reflective optical modulation element are set.

According to the above configuration, since it is not necessary to move the optical modulation elements individually to optimize a positional relationship of the optical modulation elements, it is possible to easily manufacture an optical computing section with high accuracy.

In an optical computing device according to Aspect 10 of the present invention, in addition to the configuration of any one of Aspects 1 to 9, a configuration is employed in which the optical computing section is a structure that transmits a signal light, the structure containing a light diffraction layer that is formed therein and that functions as the optical computing element.

According to the above configuration, since it is not necessary to move the optical modulation elements individually to optimize a positional relationship of the optical modulation elements, it is possible to easily manufacture an optical computing section with high accuracy.

### [Supplementary note]

The present invention is not limited to the foregoing embodiments, but can be modified in various ways by a person skilled in the art within the scope of the claims. The present invention also encompasses, in its technical scope, any embodiment derived by combining technical means disclosed in the foregoing embodiments as appropriate.

### Reference Signs List

1, 2 Optical computing device
11, 21 Optical computing section
11a1 to 11a3 Optical modulation element (transmissive optical modulation element)
21a1 to 21a3 Optical modulation element (reflective optical modulation element)
12, 22 Image sensor

## Claims

1. An optical computing device comprising: an optical computing section including an optical modulation element having a plurality of cells having phase modulation amounts that are independently set or that are capable of being independently set; and an optical sensor configured to detect a signal light that has been outputted from the optical computing section and to generate an electrical signal indicating a result of detection, wherein
the optical modulation element is (1) a transmissive optical modulation element configured to emit a signal light generated when transmitted light beams that have been phase-modulated by the plurality of cells interfere with each other and a noise light that has been transmitted through the optical modulation element without being phase-modulated by each of the plurality of cells or (2) a reflective optical modulation element configured to emit a signal light generated when reflected light beams that have been phase-modulated by the plurality of cells interfere with each other and a noise light that has been reflected by the optical modulation element without being phase-modulated by each of the plurality of cells,
in the optical modulation element, the phase modulation amounts of the plurality of cells are set so that a direction in which the signal light is emitted from the optical modulation element differs from a direction in which the noise light is emitted from the optical modulation element, and
an impact that the noise light has on the electrical signal is smaller than a case where the direction in which the signal light is emitted from the optical modulation element agrees with the direction in which the noise light is emitted from the optical modulation element.

2. The optical computing device according to claim 1, wherein
the optical sensor is an image sensor having a plurality of photoelectric conversion units, and
the image sensor is disposed so as to prevent the noise light from entering a photoelectric conversion unit that the signal light enters at an intensity of not less than a detection limit thereof, at an intensity of not less than the detection limit.

3. The optical computing device according to claim 1, wherein the optical sensor is disposed so as to (1) allow an incidence surface thereof to cross an optical axis of the signal light that has been emitted from the optical computing section and (2) prevent a point at which the incidence surface thereof crosses the optical axis of the signal light that has been emitted from the optical computing section from crossing an optical axis of the noise light that has been emitted from the optical computing section.

4. The optical computing device according to any one of claims 1 to 3, wherein
the optical computing section includes a first transmissive optical modulation element as the optical modulation element and a second transmissive optical modulation element as the optical modulation element, and
the second transmissive optical modulation element is disposed so as to (1) allow an incidence surface thereof to cross an optical axis of the signal light that has been emitted from the first transmissive optical modulation element and (2) prevent a point at which the incidence surface thereof crosses the optical axis of the signal light that has been emitted from the first transmissive optical modulation element from crossing an optical axis of the noise light that has been emitted from the first transmissive optical modulation element.

5. The optical computing device according to any one of claims 1 to 3, wherein
the optical computing section includes a first transmissive optical modulation element as the optical modulation element and a second transmissive optical modulation element as the optical modulation element, and
the second transmissive optical modulation element is disposed so as to (1) allow an incidence surface thereof to cross an optical axis of the signal light that has been emitted from the first transmissive optical modulation element and (2) prevent at least part of the noise light that has been emitted from the first transmissive optical modulation element from entering the incidence surface thereof.

6. The optical computing device according to any one of claims 1 to 3, further comprising a mirror, wherein
the optical computing section includes a first reflective optical modulation element as the optical modulation element and a second reflective optical modulation element as the optical modulation element, and
the second reflective optical modulation element is disposed so as to (1) allow an incidence/emission surface thereof to cross an optical axis of the signal light that has been emitted from the first reflective optical modulation element and reflected by the mirror and (2) prevent a point at which the incidence/emission surface thereof crosses the optical axis of the signal light that has been emitted from the first reflective optical modulation element and reflected by the mirror from crossing an optical axis of the noise light that has been emitted from the first reflective optical modulation element and reflected by the mirror or an optical axis of the noise light that has been emitted from the first reflective optical modulation element.

7. The optical computing device according to any one of claims 1 to 3, further comprising a mirror, wherein
the optical computing section includes a first reflective optical modulation element as the optical modulation element and a second reflective optical modulation element as the optical modulation element, and
the second reflective optical modulation element is disposed so as to (1) allow an incidence/emission surface thereof to cross an optical axis of the signal light that has been emitted from the first reflective optical modulation element and reflected by the mirror and (2) prevent the noise light that has been emitted from the first reflective optical modulation element and reflected by the mirror or at least part of the noise light that has been emitted from the first reflective optical modulation element from entering the incidence/emission surface.

8. The optical computing device according to claim 6 or 7, wherein the mirror has a reflecting surface nonparallel to an incidence/emission surface of the first reflective optical modulation element and the incidence/emission surface of the second reflective optical modulation element.

9. The optical computing device according to any one of claims 6 to 8, wherein the optical computing section is constituted by a single optical modulation element in which regions functioning as the first reflective optical modulation element and the second reflective optical modulation element are set.

10. The optical computing device according to any one of claims 1 to 5, wherein the optical computing section is a structure that transmits a signal light, the structure containing a light diffraction layer that is formed therein and that functions as the optical modulation element.
